# EUROPEAN PATENT APPLICATION

(11) **EP 3 291 391 A1**
(43) Date of publication of application: **07.03.2018**
(21) Application number: 16186352.7
(22) Date of filing: 30.08.2016
(51) Int. Cl.: H02G 1/10, F16L 1/20, B66F 3/28

(54) **DEVICE FOR HOISTING A SUBSEA CABLE**

(71) Applicant: Siemens Aktiengesellschaft, 80333 München (DE)
(72) Inventor: Soerensen, Johnny, 6920 Videbæk (DK)

(57) **Abstract**

The invention relates to a device (10) for hoisting a subsea cable in an offshore support structure, wherein the device (10) comprises a first carrier element (11), which is adapted to be attached inside the support structure, a second carrier element (12), which is arranged opposite to the first carrier element (11), a connection element (13), which connects the first carrier element (11) and the second carrier element (12), wherein the connection element (13) comprises a telescopic element such that the spacing (15) between the first carrier element (11) and the second carrier element (12) can be varied. Furthermore, the invention relates to a method of hoisting a subsea cable in an offshore support structure.

## Description

The present invention relates to a device for hoisting a subsea cable in an offshore support structure. Furthermore, the invention relates to a method of hoisting a subsea cable in an offshore support structure.

The connection of a subsea cable with an offshore installation, such as a wind turbine, typically involves the need of lifting the subsea cable from the seabed to a connection means at or above sea level. This is due to the fact that the subsea cable is at the seabed or even buried into the seabed, while the connection means at the wind turbine typically is at the bottom of the tower of the wind turbine. Therefore, when the wind turbine needs to be connected to the subsea cable, the subsea cable needs to be lifted along the support structure or inside the support structure until it reaches the connection means.

In the prior art, connection of the cable and, in particular, hoisting of the cable is prepared and carried out by a multiple step process. For instance, at the tower platform, which is at the top of the support structure of the wind turbine (e.g. a so-called transition piece), a winch, a device for driving the winch and further equipment needs to be mounted to the work platform. Then, after preparation and fixing of these devices, the subsea cable is pulled inside the support structure until it reaches the work platform.

A drawback of this conventional installation technique is that multiple working steps need to be carried out at elevated height, as the work platform typically is several meters above sea level. Furthermore, service personnel who is carrying out this work is exposed to the ambient conditions, which could be harsh offshore. At certain weather conditions, these works can even not be carried out at all.

Yet another disadvantage of the conventional installation technique is that the mounting of the devices and the design of the devices itself need to be customized and adopted to each specific tower platform.

As a result the pull-in of the subsea cable in an offshore support structure such as a wind turbine support structure is costly and complex.

An approach to improve the situation has been disclosed in the international patent application WO 2013/064809 A1. Therein, a complete cable pull-in apparatus is disclosed which is mounted at a flange of a tower end section in one single step. This is made possible and facilitated by a so-called guiding device. Another advantage, which is achieved by the method as presented and disclosed in the cited patent application is that the apparatus can be manufactured and designed independently on the support structure as the apparatus only needs to be connected and mounted to a tower-dependent platform.

Nevertheless, there still exist the drawbacks that work has to be carried out at elevated height and that the personnel carrying out the work are exposed to the weather conditions.

Therefore, there exists the need and the desire to provide a concept to hoist a subsea cable, wherein the concept is improved and overcomes the mentioned drawbacks which are still present.

This objective is achieved by the subject matter of the independent claims. Advantageous modifications and embodiments are disclosed in the dependent claims.

According to the invention, there is provided a device for hoisting a subsea cable in an offshore support structure. The device comprises a first carrier element, which is adopted to be attached inside the support structure, a second carrier element, which is arranged opposite to the carrier element, and a connection element, which connects the first and the second carrier elements, wherein the connection element comprises a telescopic element such that the spacing between the first carrier element and the second carrier element can be varied.

A key aspect of the present invention is the fact that the device is arranged and prepared to be mounted inside the support structure. This has the advantage, that mounting of the device and operating the device, i.e. hoisting a subsea cable, is carried out inside the support structure. Therefore, service personnel carrying out the mounting and operating of the device are not exposed any longer to the surroundings. Safety at work is therefore independent on the weather conditions. This improves the safety of the service personnel and increases the hours where mounting and hoisting the cable can be performed.

An example of an offshore support structure are one or several piles, such as a monopile or a tripod. Other types of support structures commonly used for offshore wind turbine installations are lattice structures, gravity structures, tripile foundations or floating structures. In order to arrange and attach the device to the support structure inside, the support structure advantageously has a hollow space or cavity inside.

Note that the device comprises one element or portion, namely the first carrier element, by which the device is attached, in other words fixed, to the support structure. Exemplarily, in the case of a monopile as the support structure, the first carrier element may be mounted to the walls or to a flange which is connected to the walls. There might also be present a platform inside the support structure at which the first carrier element is attached to.

"Offshore" does not only include marine environments but also lakes, rivers and the like.

The notion that the second carrier element is opposite to the first carrier element is to be understood that way that the second carrier element is not attached directly to the support structure itself but connected to the attachable first carrier element. As an example, the second carrier element and the first carrier element might both be designed as a plate. Then, in a particular embodiment of the invention, both carrier elements, namely the first carrier element and the second carrier element, might be arranged substantially parallel to each other.

In a first alternative, the cable is hoisted, partly or entirely, by means of the telescopic element of the connection element.

Such a telescopic element has the advantage that in a retracted status the device has relatively small dimensions. This is useful if the device is, for instance, carried to the offshore support structure. In other words, a connection element with a telescopic element is particularly useful if the device for hoisting the subsea cable is designed as a mobile, i.e. portable, device. Note that even in the case that the device is arranged and prepared to be permanently attached to the support structure, a connection element which is able to be extended and retracted could also be beneficial.

A portable cable pull-in device has the advantage that it can be used during multiple wind turbine installations. Thus, expenses for the cable pull-in device are saved, as the device is reusable.

In a second alternative, the cable is hoisted, partly or entirely, by means of a winch. The winch may advantageously be arranged at that carrier element which is not attached to the support structure such that it can freely perform its operation.

Note that hoisting the cable as a combination of both an action of the telescopic element and an action of the winch is also an option which is comprised by the present invention.

One example of a support structure is a transition piece of a wind turbine support structure. In this case, the wind turbine support structure comprises the transition piece and may also comprise a monopile, wherein the monopile is driven into the seabed and ends at a certain distance below sea level, while the transition piece is realizing the connection between the monopile and the work platform upon which the wind turbine tower is erected.

Another example of an offshore support structure is the tower of an offshore wind turbine. In this case, the device may be mounted inside the tower, in particular the upper half of the tower, and a cable may be pulled upwards inside the tower by means of the inventive device.

In another embodiment of the invention, the first carrier element is attached to the transition piece inside of the transition piece in the upper half, in particular still being above sea level.

In another embodiment of the invention, the first carrier element comprises a recess for receiving the cable to be hoisted by the device.

The recess, which can also be described as a notch, is particularly beneficial for the actual lifting process of the cable. The recess may also be designed large enough to receive a tube which surrounds the cable and guides the cable from its access point in the walls of the transition piece upwards.

Particularly, the telescopic element comprises one or more hydraulic pistons.

A hydraulic piston is a well proved and reliable technique to realize an element which can be extended and contracted. In an exemplary embodiment, the telescopic element comprises a first hydraulic piston and a second hydraulic piston. These hydraulic pistons may be arranged substantially parallel to each other (i.e. to the respective length axes of the pistons) and may ensure a certain stability of the connection element connecting the first and the second carrier element.

Another option for realizing the telescopic element is an electrical actuator.

The invention is further directed towards a method of hoisting a subsea cable in an offshore support structure, the method comprising the following steps:
a) providing a device comprising a first carrier element, a second carrier element, and a connection element connecting the first carrier element and a second carrier element, wherein the connection element comprises a telescopic element;
b) mounting the device inside the support structure; and
c) hoisting the cable by means of the telescopic element.

As an alternative, the method of hoisting a subsea cable in an offshore support structure comprises the following steps:
a) providing a device comprising a first carrier element, a second carrier element, a connection element connecting the first carrier element and a second carrier element, and a winch, wherein the connection element comprises a telescopic element;
b) mounting the device inside the support structure; and
c) hoisting the cable by means of the winch.

In contrary to conventional methods of hoisting a subsea cable in an offshore support structure, both presented methods represent a considerable improvement as after provision of the relevant components of the device, the device for hoisting the subsea cable is mounted inside the support structure. This has the advantage, that, on the one hand, the work of attaching the device to the support structure and hoisting the cable in the support structure is performed inside the support structure which protects the service personnel carrying out this work from the ambient weather conditions. Furthermore, the hoisting of the subsea cable does not need to be performed at elevated heights at the tower working platform but may be performed at less distance to the sea level.

In an embodiment of the invention, the device is mounted detachably to the support structure, such that the device can be removed after the cable has been hoisted.

A detachable device has the advantage that the device can be used several times. Furthermore, the device does not block the interior of the support structure by its presence. In the case of such a mobile device the connection elements being configured retractable and extendable have the further advantage that its dimensions are more favorable to be carried by service personnel.

In a certain embodiment of the inventive method, the provision of the device comprises two separate steps, namely providing
- the first carrier element, the second carrier element and the connection element, and
- adding the winch to the second carrier element.

In other words, the sub-unit comprising the first carrier element, the second carrier element and the connection element may be manufactured and the winch may only be added afterwards. The addition of the winch to the remaining parts of the device may, for example, occur and take place during mounting of the device to the support structure, for example after attaching the first carrier element, second carrier element and the connection element to the support structure and before starting hoisting the subsea cable. This could be advantageous as the winch and the winch drive associated with the winch could have a considerable weight such that it is favorable to transport and install these component separately.

Another option is to permanently install the sub-unit (comprising the first and second carrier element and the connection element) inside the support structure, but provide the winch temporarily. Thus, the winch, which might be relatively expensive, can be reused during multiple wind turbine installations.

In another embodiment of the invention, the step of adding the winch to the second carrier element is carried out shortly before the process of hoisting the cable.

In this context "shortly" refers to a time span of maximum one week.

Finally, in yet another embodiment of the invention, the method comprises the further step of connecting the hoisted cable to a part of a wind turbine which is related to the offshore support structure.

After the actual lifting of the cable from the bottom part of the support structure upwards, it is advantageous to add further steps of connecting the end of the lifted subsea cable with the part of the wind turbine which is foreseen to receive and to be connected with the subsea cable. This part could be a part of the work platform or it could also be a part of the bottom section of the wind turbine tower.

The invention is now described, by way of example only, by the accompanying drawings, of which:
- Figure 1: shows a part of a transition piece of a support structure for a wind turbine with a conventional cable pull-in device;
- Figure 2: shows a potential location at a support structure for a wind turbine of the inventive cable pull-in device;
- Figure 3: shows a device for hoisting a subsea cable in an offshore support structure in a contracted state;
- Figure 4: shows the same device as in Figure 3, now being in an extended state and being connected to a tube for a cable;
- Figure 5: shows the step wherein the winch of the device is connected to the subsea cable to be hoisted; and
- Figure 6: shows the subsea cable after being hoisted by the device.

Note that the illustration in the drawings are schematic. Same or similar components and elements in the drawings may be referenced by the same reference signs.

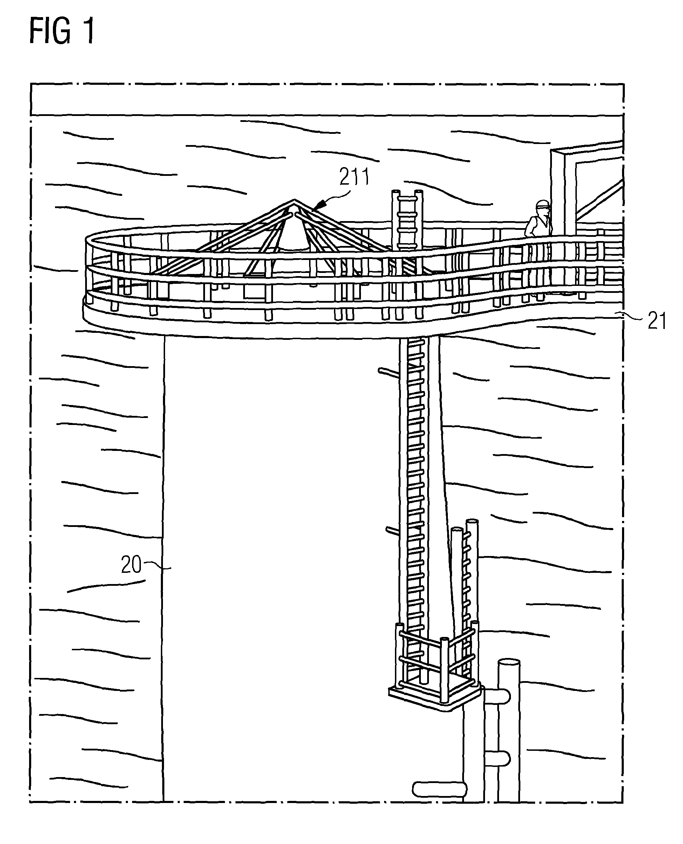

Figure 1 illustrates a part of a transition piece 20 acting as an offshore support structure for a wind turbine for generating electricity. The transition piece 20 comprises a work platform 21 at its top end. The work platform 21 is typically situated at elevated heights above sea level, for instance five to fifteen meters. Conventionally, an apparatus for hoisting a subsea cable is temporarily mounted at this work platform 21. Figure 1 illustrates an example of such a conventional cable pull-in device 211 comprising a plurality of struts (braces), at which a winch is attached (not shown). Such a conventional cable pull-in device 211 is also referred to as "Samson post".

The installation of a conventional cable pull-in device 211 is time-consuming, dangerous and dependent on the weather conditions. This implies that under harsh weather conditions, installation and hoisting of the subsea cable from the work platform 21 is not possible.

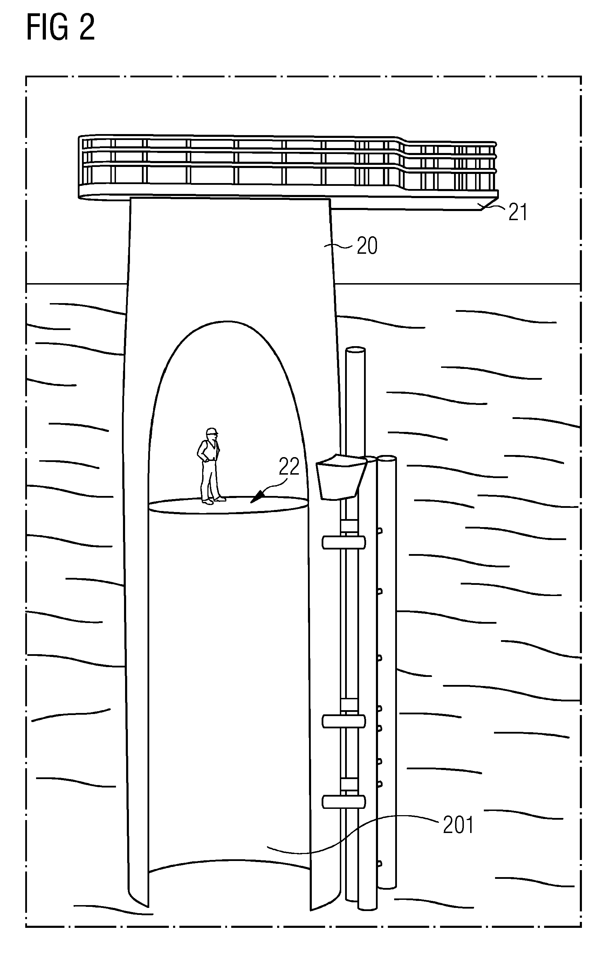

Therefore, the invention proposes a different concept for hoisting the subsea cable. The inventive concept involves mounting a device for hoisting the subsea cable inside the offshore support structure. This is illustrated in Figure 2 by an inner platform 22 at which the device is located. The device as such is not illustrated in Figure 1 for sake of clarity but will be illustrated and described in more details in the following drawings.

The inner platform 22 may be a platform which already exists or is already foreseen in a transition piece 20. In this case, there only needs to be generated a certain open and free space for installing the device. However, as can be seen, the device as such is not space-consuming such that in general it will be easy to add this device to the existing inner platform.

Alternatively, such an additional platform may also be deliberately designed for accommodating and providing the space and possibility to the device to be fitted to the transition piece 20. Furthermore note that the transition piece 20 is designed and shaped as a tubular element comprising walls 201 which surround a hollow space inside.

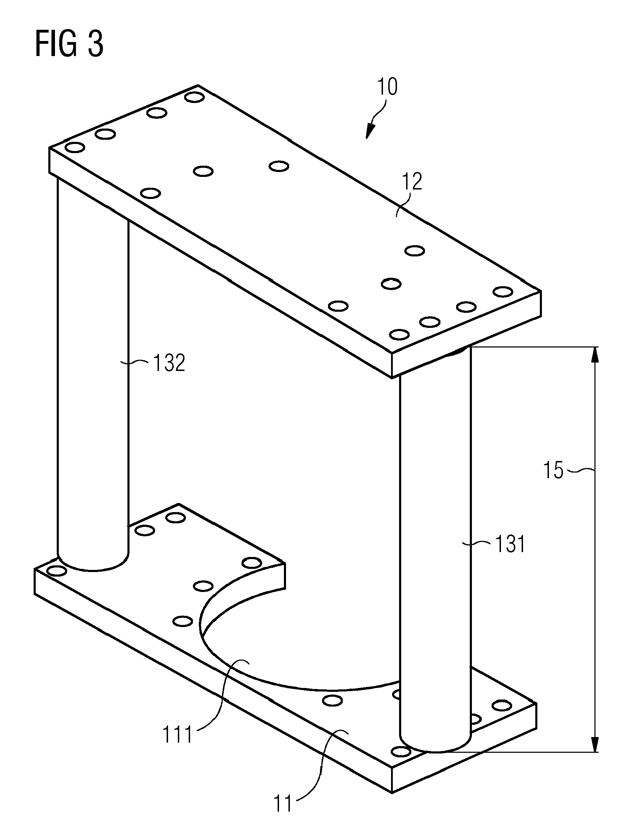

Figures 3 to 6 show the device for hoisting the subsea cable in more detail.

Figure 3 shows the device 10 in its contracted, i.e. in its shortened state. In this state, the connecting elements, which are realized by a first hydraulic piston 131 and a second hydraulic piston 132, comprise its minimum length. In other words, the spacing 15 between the first carrier element 11 and the second carrier element 12 is minimum as dictated by the length of the piston in its retracted state. Such a state is beneficial during transportation of the device to the support structure. Also note the recess 111 being part of the first carrier element 11 and having the purpose of receiving the cable or the tube surrounding the cable more easily.

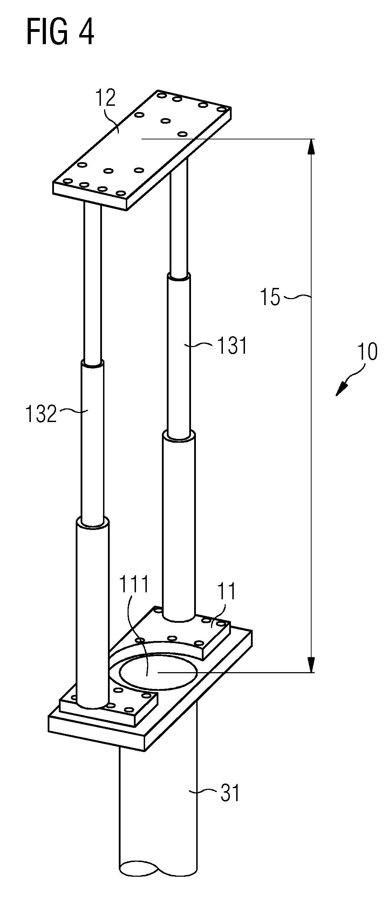

Figure 4 shows the same device 10 as illustrated in Figure 3 in an extended state. This means, that the first hydraulic piston 132 and the second hydraulic piston 132, each of them comprising three telescopic elements, have a maximum length such that the spacing 15 between the first carrier element 11 and the second carrier element 12 becomes maximum. In this state, lifting and, in other words, hoisting of the cable is facilitated.

In Figure 4, it is sketched that the first carrier element 11 is mounted to a specific part of the support structure and it is connected to a tube 31 which itself accommodates and receives in its hollow space inside the cable to be hoisted. Due to its shape, this tube 31 may also be referred to as J-tube. The purpose of this J-tube is that extreme bending of the cable, when entering the support structure at its bottom, is prevented as the J-tube dictates or stipulates the bending of the cable.

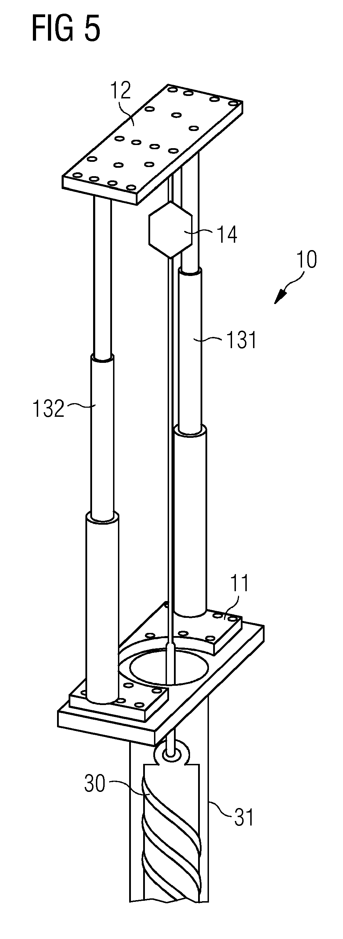

Figure 5 shows the step of hoisting the cable 30 inside the tube 31. This is carried out by the winch 14 which has been omitted for sake of clarity in the previous Figures. The winch 14 is connected to the second carrier element 12. The winch 14 may be fixed to the second carrier element 12 already from the beginning on, but, alternatively, the winch 14 may also be only added to the remaining parts of the device just prior to hoisting the cable. In any case, the winch 14 has the capability and power to pull the cable 30 from the bottom of the transition piece upwards.

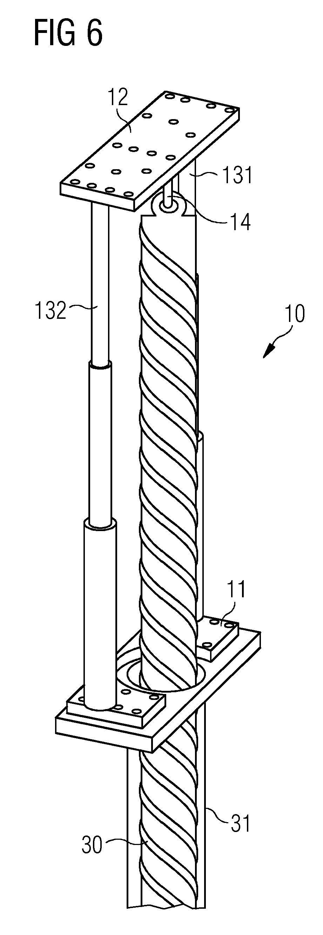

The cable 30 being in such an upward position is shown in Figure 6. Figure 6 shows the state and the step in which the cable 30 is ready to be connected to the remaining parts of the support structure or even to a part of the wind turbine such as the bottom section of the wind turbine tower. The steps of hoisting the cable are terminated and after detaching the cable 30 from the winch 14 the device may for example be contracted and may even be detached, i.e. removed, from the support structure.

## Claims

1. Device (10) for hoisting a subsea cable in an offshore support structure,
wherein the device (10) comprises
- a first carrier element (11), which is adapted to be attached inside the support structure,
- a second carrier element (12), which is arranged opposite to the first carrier element (11), and
- a connection element (13), which connects the first carrier element (11) and the second carrier element (12), wherein the connection element (13) comprises a telescopic element such that the spacing (15) between the first carrier element (11) and the second carrier element (12) can be varied.

2. Device (10) according to claim 1,
wherein the telescopic element comprises at least one hydraulic piston.

3. Device (10) according to one of the preceding claims, wherein the support structure is a transition piece (20) which is arranged for being connected to a tower of a wind turbine.

4. Device (10) according to one of the preceding claims, wherein the first carrier element (11) comprises a recess (111) for receiving the cable to be hoisted by the device (10).

5. Device (10) according to one of the preceding claims, wherein the device (10) furthermore comprises a winch (14), which is arranged at the second carrier element (12) and which is destined for pulling the subsea cable.

6. Method of hoisting a subsea cable in an offshore support structure, the method comprising the following steps:
a) providing a device (10) comprising a first carrier element (11), a second carrier element (12), and a connection element (13) connecting the first carrier element (11) and the second carrier element (12), wherein the connection element (13) comprises a telescopic element,
b) mounting the device (10) inside the support structure, and
c) hoisting the cable by means of the telescopic element.

7. Method of hoisting a subsea cable in an offshore support structure, the method comprising the following steps:
a) providing a device (10) comprising a first carrier element (11), a second carrier element (12), a connection element (13) connecting the first carrier element (11) and the second carrier element (12), and a winch (14), wherein the connection element (13) comprises a telescopic element,
b) mounting the device (10) inside the support structure, and
c) hoisting the cable by means of the winch (14).

8. Method according to claim 7,
wherein the provision of the device (10) comprises the two separate steps of
- providing the first carrier element (11), the second carrier element (12) and the connection element (13), and
- adding the winch (14) to the second carrier element (12).

9. Method according to claim 8,
wherein the step of adding the winch (14) to the second carrier element (12) is carried out shortly before the process of hoisting the cable.

10. Method according to one of the claims 6 to 9,
wherein the device (10) is mounted detachably to the support structure, such that the device (10) can be removed after the cable has been hoisted.

11. Method according to one of the claims 6 to 10,
wherein the method comprises the further step of connecting the hoisted cable to a part of a wind turbine which is related to the offshore support structure.
